# EUROPEAN PATENT SPECIFICATION

(11) **EP 4 057 138 B1**
(45) Date of publication and mention of the grant of the patent: **23.07.2025**
(21) Application number: 21305310.1
(22) Date of filing: 12.03.2021
(51) Int. Cl.: G06F 9/451, A63F 13/355, G09G 5/36, G06F 3/14

(54) **IMPROVED STREAMING OF GRAPHIC RENDERING ELEMENTS**
VERBESSERTES STREAMING VON GRAPHISCHEN WIEDERGABEELEMENTEN
DIFFUSION AMÉLIORÉE D'ÉLÉMENTS DE RENDU GRAPHIQUE

(43) Date of publication of application: 14.09.2022
(73) Proprietor: Nothing2Install, 13001 Marseille (FR)
(72) Inventor: PENNE, Vincent, MUI WO (HK)
(74) Representative: Atout PI Laplace

(56) References cited:
- US-A1- 2011 157 196
- US-A1- 2012 113 091
- LI LIN ET AL: "LiveRender", MULTIMEDIA, ACM, 2 PENN PLAZA, SUITE 701 NEW YORK NY 10121-0701 USA, 3 November 2014 (2014-11-03), pages 347 - 356, XP058058707, ISBN: 978-1-4503-3063-3, DOI: 10.1145/2647868.2654943

## Description

### FIELD OF THE INVENTION

The present invention relates to the field of virtualization of applications. More specifically, it relates to the field of streaming of graphic rendering elements from a server to a client device, when the server executes an application which is displayed by the client device.

### BACKGROUND PRIOR ART

The virtualization of applications consists in executing, on a server, applications that are actually controlled remotely by a user device. In practice, the user device is equipped with input interfaces (e.g mouse, keyboard, microphone...) and output interfaces (e.g screen, speakers...). A user interacts with the application using the input and output interfaces of the user device, but, instead of being executed locally in the user device, the application is executed on the server. To this effect, the input commands are transmitted by the user device to the server, the server executes the application, and sends the output to the user device, which can then provide the output to the user.

The virtualization provides a number of advantages. One of them is that the maintenance of an application is greatly improved. Indeed, the server environment is more easily controlled by the provider of the application than the environment of the user device. In addition, the application needs to work correctly only on a single, or a limited number of server environments, rather than a wide number of different environments with possibly very different hardware, operating systems, etc... In addition, there is, using virtualization, simply no need to install the applications on user devices, they are directly available from a server, and ready to use for all the users as early as they are installed on a server.

The virtualization is of particular interest to provide state-of the art applications to legacy systems. For example, the set-top boxes provided by the internet access providers belong to a wide number of different generations, and some of them operate on legacy hardware and operating systems with limited capabilities. While it is in practice extremely difficult and costly to replace all the deployed set-top boxes, this diversity of environments drastically limits the ability of internet access providers to provide all their clients with new applications. For example, some legacy set-top boxes may have limited computing capabilities and/or may not able to execute applications developed using the most modern programming languages and libraries. Using virtualized applications overcomes this issue, because the user devices are only responsible for managing the inputs and outputs, and all the processing of the application is performed on a server, which is able to use the latest libraries and programming languages, and benefits from powerful computing capabilities.

The most widely used techniques for application virtualization rely on the use of video streams. These techniques consist in streaming the input commands from the user device to the server, running the application in the server, generating the graphic rendering of the application in the server, and generating, on the server, a video stream that represents the graphic rendering of the application. This video stream is then sent to the user device, which decodes the video stream, and displays it to the client. This approach however suffer from a number of drawbacks:
- it implies a significant latency: once a user input is received by the server, and processed by the application, the output of the application (which corresponds to the feedback expected by the user) needs to be encoded in a video stream, sent to the client, then decoded as a video to be displayed. This implies an important latency which deteriorates the user experience;
- it consumes an important bandwidth: the video streams are known to be very consuming in terms of bandwidth. This is even truer in this case because, in order to limit the latency, the video steam needs to be encoded in real time, using a limited number of reference frames. The most advanced video coding options, such as multipass encoding, or use of bi-directional reference frames, therefore cannot be used in practice. A high video bitrate is therefore necessary to obtain a correct video quality. Such a high bandwidth is not necessarily available for all users at any time;
- it implies a high computing load on the server: video coding is known to be very intensive in terms of computing load. Performing a live video coding for each user therefore implies a high computing load burden on the server.

All these drawbacks drastically limit the scalability of virtualization solutions, i.e the ability to use such virtualization solution to serve a wide number of users at the same time.

Another approach consists in streaming, from the server to the user device, graphic rendering commands instead of a video stream. Therefore, the server does not perform the graphic rendering and video coding, but streams to a user device all the graphic rendering commands that are generated by the applications running on the server, for this user device. The user device then receives the graphic rendering commands, and performs the graphic rendering directly before displaying the graphical output to the user.

The computing load on the server is thus greatly reduced, because it does not need to perform graphical rendering and video coding for each user.

The latency is also greatly reduced, because the steps of video coding and decoding are not necessary.

In addition, the transmission of graphic rendering commands forms a lossless transmission, while a video coding transmission is in practice always lossy.

However, in practice, the bandwidths requirements of the graphic rendering command streaming can be very high. This is because the streaming of the graphic rendering commands implies the streaming of a lot of redundant and/or useless information. Indeed, applications usually generate a large number of graphical rendering commands, even if they do not impact the final display (for example, if a window that generates graphic commands is hidden). Indeed, as the applications are in general developed for sending commands to a local GPU, the bandwidth requirements for sending commands is usually not a concern of the developers of applications. In addition, the commands are re-generated for each frame. Therefore, the vast amount of commands that are generated by the applications renders, in practice, the bandwidth consumption gains expected through this technique limited, when not even turning them in bandwidth consumption losses.

Different approaches for optimizing the streaming of graphical commands were proposed, such as US 2011/0157196, US 2012/113091 A1 and LI LIN ET AL: "LiveRender", MULTIMEDIA, ACM, 2 PENN PLAZA, SUITE 701 NEW YORK NY 10121-0701 USA, 3 November 2014 (2014-11-03), pages 347-356.

However, there is a need for an improved streaming of graphical rendering elements for a user device that limits the bandwidth needed for streaming all the graphical information needed by the user.

### SUMMARY OF THE INVENTION

To this effect, the invention discloses a first computing device comprising: a communication endpoint configured to establish a connection with a second computing device; an access to a dictionary of unique graphic rendering elements, comprising, for each unique graphic rendering element: a definition of the unique graphic rendering element; a unique id; an indication whether the definition of the unique graphic rendering element has been already sent to the second computing device; at least one processing logic configured to: determine, for a frame to be displayed by the second computing device, an input set of graphic rendering elements using at least one rendering command and a renderstate of a graphic API for said frame; convert said input set of graphic rendering elements to a transmission set of unique graphic rendering elements belonging to said dictionary; send to the second computing device, for each unique graphic element of the transmission set: the unique id of the unique graphic rendering element; if the unique graphic rendering element has not been already sent to the second computing device, the definition of the unique graphic rendering element.

Advantageously, a unique graphic rendering element is a graphic rendering command or a graphic rendering parameter.

Advantageously, said at least one processing logic is further configured, for at least one graphic rendering element, to: verify if it has an impact on the display of the frame; if and only if it has an impact on the display of the frame, add it to the input set.

Advantageously, said at least one processing logic is further configured, upon the conversion of a graphic rendering element of the input set to a unique graphic rendering element of the transmission set, to: verify if the unique graphic rendering element is already present in the dictionary; if and only if it is not already present in the dictionary, create an entry in the dictionary for the unique graphic rendering element, with a new unique id, and an indication that the element has not been already sent to the second computing device.

Advantageously, said least one processing logic is configured to execute a virtual graphic driver, and wherein the input set of graphic rendering elements of a frame to be displayed by the second computing device is a frame buffer to be displayed, generated by a window composer.

Advantageously, the dictionary comprises, for each unique rendering element, a bit field; the second computing device is associated with a defined position in the bit field; the indication whether the definition of the unique graphic rendering element has been already sent to the second computing device is provided by the value of the bit at the defined position in the bit field.

Advantageously, the at least one processing logic is further configured to send, separately from said transmission set, to the second computing device synchronization information relative to the dictionary.

Advantageously, the unique graphic rendering elements are defined hierarchically, higher-level unique graphic rendering elements being dependent upon lower-level unique graphic rendering elements.

Advantageously, each unique graphic rendering element of the transmission set is represented as a node of a tree, and, for each node representing a defined unique graphic rendering element: the descendants of said node are the unique graphic rendering elements that have an impact on said graphic unique rendering element; said unique graphic rendering element, comprises as parameters, the unique ids of the unique graphic rendering elements of the children of said node.

Advantageously, the at least one processing logic is configured to include in the transmission set all the unique graphic rendering elements in said tree, except those that correspond to descendants of nodes corresponding to unique graphic rendering elements that have been already sent to the second computing device.

The invention also discloses a second computing device comprising: a communication endpoint configured to establish a connection with a first computing device; an access to at least one display; an access to a dictionary of unique graphic rendering elements, comprising, for each unique graphic rendering element: a definition of the unique graphic rendering element; a unique id; at least one processing logic configured to: receive, from said first computing device, a transmission set of unique graphic rendering elements for a frame to be displayed by said second computing device, said transmission set comprising, for each unique graphic rendering element: a unique id; if the unique graphic rendering element is not already present in said dictionary, a definition of said unique graphic rendering element; convert said transmission set of unique graphic rendering elements to an output set of graphic rendering elements belonging to said dictionary using, for each unique graphic rendering element, its definition as found in the dictionary or received from the first processing device; generate at least one rendering command and a renderstate of a graphic API based on said output set of graphic rendering elements; trigger the display, on said at least one display, of the frame based on said renderstate.

Advantageously, the computing system comprises a first computing device according to one of the embodiments of the invention; a second computing device according to one of the embodiments of the invention.

The invention also discloses a computer-implemented method comprising, by a first computing device: establishing a connection with a second computing device; accessing a dictionary of unique graphic rendering elements, comprising, for each unique graphic rendering element: a definition of the unique graphic rendering element; a unique id; an indication whether the definition of the unique graphic rendering element has been already sent to the second computing device; determining, for a frame to be displayed by the second computing device, an input set of graphic rendering elements using at least one rendering command and a renderstate of a graphic API for said frame; converting said input set of graphic rendering elements to a transmission set of unique graphic rendering elements belonging to said dictionary; sending to the second computing device, for each unique graphic element of the transmission set: the unique id of the unique graphic rendering element; if the unique graphic rendering element has not been already sent to the second computing device, the definition of the unique graphic rendering element.

The invention also discloses a computer-implemented method comprising, by a second computing device: establishing a connection with a first computing device; accessing at least one display; accessing a dictionary of unique graphic rendering elements, comprising, for each unique graphic rendering element: a definition of the unique graphic rendering element; a unique id; receiving, from said first computing device, a transmission set of unique graphic rendering elements for a frame to be displayed by said second computing device, said transmission set comprising, for each unique graphic rendering element: a unique id; if the unique graphic rendering element is not already present in said dictionary, a definition of said unique graphic rendering element; converting said transmission set of unique graphic rendering elements to an output set of graphic rendering elements belonging to said dictionary using, for each unique graphic rendering element, its definition as found in the dictionary or received from the first processing device; generating at least one rendering command and a renderstate of a graphic API based on said output set of graphic rendering elements; triggering the display, on said at least one display, of the frame based on said renderstate.

The invention also discloses a computer program product, stored on a non-transitory computer readable medium, comprising computer code instructions for executing a method according to one of the embodiments of the invention.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a virtualization solution of the prior art, which relies on video streaming;
- Figure 2 represents a virtualization solution based on a streaming of graphic rendering elements, in which the invention may be implemented;
- Figure 3 represents a computing system in a number of embodiments of the invention;
- Figure 4 represents an example of hierarchical definition of unique graphic rendering elements in a number of embodiments of the invention;
- Figure 5 represents a tree representation of unique graphic rendering elements in a number of embodiments of the invention;
- Figures 6a and 6b represent an example of two successive frames for which graphic rendering elements can be streamed, in a number of embodiments of the invention, in an example wherein a rotation is applied to a box;
- Figures 7a and 7b represent two examples of trees of unique graphic rendering elements representing the two frames represented in figures 6a and 6b;
- Figures 8a, 8b and 8c represent an example of three successive frames for which graphic rendering elements can be streamed, in a number of embodiments of the invention, in an example wherein a rotation is applied to a box leading to the disappearance of a texture in the rendering;
- Figure 9 represents an example of computer-implemented method executable by a first computing device in a number of embodiments of the invention;
- Figure 10 represents an example of computer-implemented method executable by a second computing device in a number of embodiments of the invention.

### DETAILED DESCRIPTION OF THE INVENTION

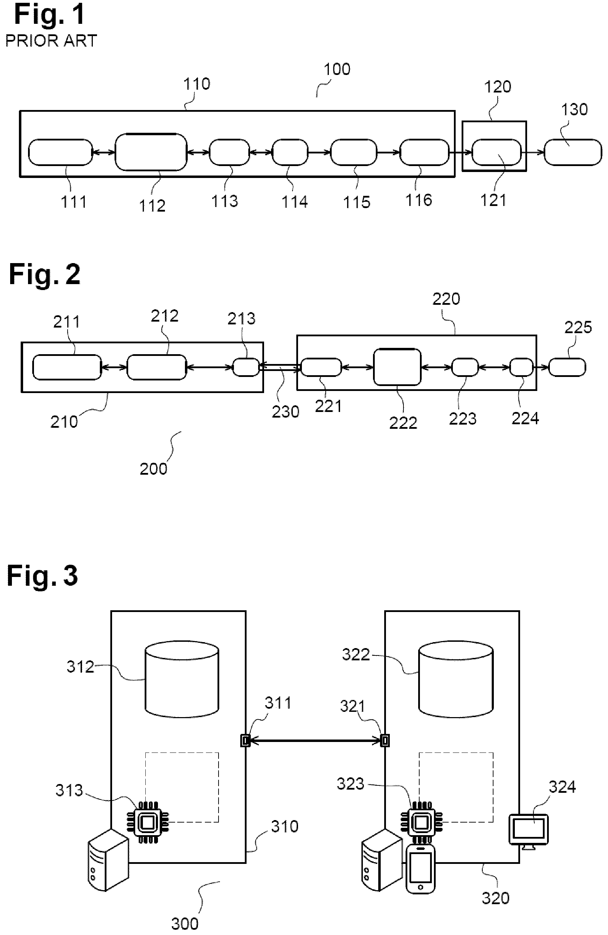

Figure 1 represents a virtualization solution of the prior art, which relies on video streaming.

In the system 100, a server 110 executes remotely an application 111 which is controlled from a client device 120.

The application 111 uses a graphic API 112 that generates graphic rendering commands according to the state of the application. Such graphic API may for example be one of the APIs called OpenGL, ES 2.0, Direct3D, etc.

The graphic rendering commands are processed by a driver 113 and a GPU (Graphic Processing Unit) 114 to generate virtual display 115 of the application, that is to say a pixel-by-pixel representation of the layout of the application for each time frame. The virtual display is then encoded by a video encoder 116 into a video stream, which is sent in real time to a client (or user device) 120.

The client 120 receives the video stream and decodes it using a video decoder 121. The decoded stream is then displayed to a user by a display controller 130.

As explained in more details above, this solution suffers from a number of drawbacks, including:
- a poor latency;
- high bandwidth requirements;
- huge computing burden for the server, if such solution is implemented for a large number of users.

The figure 2 represents a virtualization solution based on a streaming of graphic rendering elements, in which the invention may be implemented.

The system 200 also comprises a server 210 which is responsible for the execution of one or more applications that are controlled from a remote client 220.

The server 210 executes one or more applications. Therefore, one or more applications or application windows 211 are executed by the server 210, for the client 220. Even if a single application 211 is represented in figure 2, the invention is applicable as well to a plurality of applications running in parallel.

The application 211, as well as the other applications running on the server 210, relies on a graphic API 212, such as OpenGL, Direct3D, or OpenGL ES2.0. Each application generates graphic commands defining the layout using the API 212. The graphic commands comprise commands that modify the display (for example, commands that create vertices or modify the renderstate), and graphic rendering commands that trigger the rendering of the display.

The graphic commands are then sent to the virtual graphic driver 213.

In general purpose computers, a computer sends such frame buffers to its graphic driver that processes the graphic commands to generate a pixel by pixel representation of the frame to be displayed, that will be sent for display to a display controller. The graphic drivers thus provide the usual interface between a computer and the display.

In the example of the server 210, the virtual driver 213 is installed in place of usual driver that actually perform the display, but, instead of directly generating a pixel-by-pixel representation of the display using all the commands, the virtual driver executes the graphic commands to obtain a symbolic representation of the display, then send to the client 220, for a remote display, a transmission set of graphic rendering elements that comprises elements of this symbolic representation of the display, and graphic rendering commands . The communication is performed using a shared protocol 230. The graphic rendering elements may comprise graphic rendering commands and/or graphic rendering parameters. More generally, a graphic rendering element may designate any element that is used during a graphic rendering process, for example a graphic command, a graphic rendering command, and graphic parameter or an element of the renderstate of a graphic API.

As will be explained in more details below, the sending of graphic rendering elements through the protocol includes a conversion of an input set of graphic rendering elements of the frame buffer, including a renderstate as modified by the graphic commands, received by the virtual driver 216 into a transmission set of unique elements. This set of unique rendering element will be referred to, in the disclosure, by the term "transmission set", because it aims to be transmitted from one computing device to another. However, this naming convention only aims at simplifying the understanding of the disclosure and does not bear any limitative meaning. Any other suitable naming convention could be applied to this "transmission set". For example, it may be referred to as the "frame transmission set" when it aims at transmitting the display for a single frame.

The use of a virtual driver provides a very convenient solution, because it can be deployed very easily in any server: indeed, the server is configured to send, for each frame to display, a frame buffer to the graphic driver which is installed. Installing a virtual graphic driver to stream graphic rendering elements to a client therefore provides an efficient solution for performing rendering elements streaming. This solution is especially convenient for streaming rendering elements that concern the whole display, because the graphic driver receives all the rendering graphic elements that affect the display.

In the client 220, when the transmission set of graphic rendering elements are received through the protocol 230, a protocol interpreted 221 is first used for interpreting the protocol, and extracting the unique rendering elements. These elements are then converted into elements (more specifically, graphic rendering commands in a graphic API (e.g OpenGL, Direct3D, etc...)) 222 used by the client 220. More specifically, the interpretation of the transmission set allows reconstructing on the client side a renderstate and graphic rendering parameters that are used by the graphic rendering commands for the display of a frame, in a graphic API 222. The renderstate, graphic rendering parameters and graphic rendering commands are then sent to a GPU of the client 220, to be displayed by a display controller 225.

The system 200 therefore allows a virtualization of applications, since the applications 211 that are controlled by the client 220, actually run on the server 210. Meanwhile, the use of an optimized protocol 230 allows, as will be explained in more detailed hereinafter, to substantially reduce the bandwidth consumption of the streaming of graphical elements.

It is also worth noting that the APIs 212 and 222 are not necessarily the same: in a number of embodiments of the invention, the unique graphic rendering elements used in the protocol 230 do not exactly match the elements of the API 212, but are abstract elements that may be converted in a plurality of different APIs.

Therefore, elements in a first API 212 (for example, OpenGL) may be converted in abstract unique rendering elements in the protocol 230, then converted back to a second API 222 (for example, Direct3D). This greatly simplifies the development and management of applications, while allowing the applications to be executed in a wide number of platforms. Indeed, the application needs to be developed and executed for a single graphic API (the API 212), but may be executed for/controlled from a large number of different clients 220, that may have different APIs 222.

The system 200 is provided by means of non-limitative example only, and the invention is applicable to other systems. For example, the unique graphic rendering elements are not necessarily sent by a virtual driver 216, but any suitable means for sending graphic rendering elements to a client may be used.

Similarly, the invention is not restricted to embodiments wherein the graphic rendering elements represent a full display at the output of a window composer. The invention is on the contrary applicable to the streaming of graphic rendering elements that represent any consistent element to display, such as an application or an application window.

The figure 3 represents a computing system in a number of embodiments of the invention.

The computing system 300 is formed of a first computing device 310, and a second computing device 320. The first computing device 310 executes one or more applications controlled from the second computing device 320, and sends to the second computing device 320 graphic rendering elements so that the second computing device 320 can perform a rendering of the applications. For example, the first computing device 310 may be the server 210, and the second computing device 320 the client 220.

The first computing device 310 may be any computing device that allows executing an application and streaming the graphic rendering elements generated by this application. The first computing device 310 may for example be a server.

The second computing device may be any computing device that allows a user to control an application, and view the output of the application on a display. The second computing device 320 may for example be a personal computer, a smartphone, a laptop, a tablet, etc.

To this effect, the first computing device 310 comprises a communication endpoint 311 configured to establish a connection with the second computing device 320, and the second computing device 320 comprises a communication endpoint 321 configured to establish a connection with the first computing device 310.

The communication endpoints 311, 321 may be for example a WAN connection or communication ports. According to various embodiments of the invention, the communication endpoints 311, 321 may comprise any means allowing a communication between the first device 310 and the second computing device 320, such as a TCP/IP port.

The first computing device 310 comprises an access to a dictionary 312 of unique graphic rendering elements. According to various embodiments of the invention, the dictionary 312 may be either located in a storage of the first computing device 310, or in one or more storages of one or more devices in connection to the first computing device 310. For example, the first computing device 310 may be a server, and the dictionary 312 be distributed in one or more servers of the same server farm. As explained above, graphic rendering elements may encompass any element that may be used for the graphic rendering, in particular graphical commands or graphical parameters.

The graphic rendering elements in the dictionary 312 are called, in this disclosure, "unique rendering elements", because each element corresponds to a uniquely defined and parameter element. While, in a graphic API, a rendering element corresponds to a type of elements for which values of parameters need to be defined, in the dictionary 312, a unique rendering element corresponds to a type of element associated to the values of all parameters associated with that element.

According to various embodiments of the invention, the types of unique rendering elements may either strictly match the type of elements of a defined API, such as OpenGL or Direct3D, or be slightly different. The latter solution is especially interesting, if abstract, high level elements need to be defined, or if the graphic APIs used by the first and second computing devices are not the same.

The dictionary 312 comprises, for each unique graphic rendering element:
- a definition of the unique graphic rendering element: such a definition comprises a type of element, but also a value of parameters associated with the type of element. For example, if the type of elements consists in drawing a triangle, the unique rendering element may comprise parameters such as a position, size, or color of the triangle;
- a unique id: this unique identifier allows retrieving the unique graphic rendering element. When the unique graphic rendering is already known by the second computing device 320, it is sufficient to send the unique id to the second computing device 320, so that the second computing device 320 executes the element;
- an indication whether the definition of the unique graphic rendering element has been already sent to the second computing device. The presence of such an indication in the dictionary allows the first computing device, when sending a unique graphic rendering element to the second computing device, to determine whether it is sufficient to send the id of the element, or if a complete definition of the element needs to be sent.

In a number of embodiments of the invention:
- the dictionary comprises, for each unique rendering element, a bit field;
- the second computing device is associated with a defined position in the bit field;
- the indication whether the definition of the unique graphic rendering element has been already sent to the second computing device is provided by the value of the bit at the defined position in the bit field.

In practice, this means that each of the unique rendering elements is associated, in the dictionary, with a bit field which defines to which clients the unique rendering element has already been sent. Each client is associated with a defined position, which is the same for all the bit fields of the different unique rendering elements. For example, if the second computing device 320 is associated with the 3^{rd} bit of the bit fields, for each unique rendering element, the value of the 3^{rd} bit of the bit field indicates whether the unique rendering elements has been already sent or not to the client.

This allows the first computing device 310 to serve a large number of clients in the same time, while requiring a limited amount of memory. For example, a bit field of 32 bit (or 4 bytes) is sufficient to assess whether a graphic rendering element has been sent to 2³² different clients / user devices.

The first computing device 310 further comprises at least one processing logic 313. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

The at least one processing logic 313 (which may, over the course of the disclosure, be noted, for the sake of simplicity "the processing logic" even though this may, in some embodiments of the invention, designate a plurality of processing logics) is configured to determine, for a frame to be displayed by the second computing device, an input set of graphic rendering elements using at least one rendering command and a renderstate of a graphic API for said frame.

In practice, the at least one processing logic takes as input at least one graphic rendering command, and corresponding graphic parameters and renderstate, provided that these graphic rendering parameters and renderstate have been created and/or modified by previous graphic commands. Indeed, many graphic commands aim at modifying the renderstate, or graphic parameters, for example adding or modifying graphic primitives. When graphic commands have been executed for a frame, primitives and parameters are defined for the display, for example as part of the renderstate. Then initial graphic rendering commands such as the commands draw() or clear() can be used for actually triggering the display based on the renderstate.

In a number of embodiments of the invention, the at least one processing logic takes as input, at the end of the rendering, the renderstate and initial graphic rendering commands such as the commands draw() or clear(). Taking as input the renderstate after the execution of graphical rendering commands, rather than the graphic commands themselves, is advantageous, because some commands will not impact the final rendering, and will be naturally ignored when taking as input the renderstate. The at least one processing logic may also take as input all graphic commands, and execute itself the graphic command to modify the renderstate and provide parameters to the graphic rendering commands.

In a number of embodiments of the invention, the input set comprises all or a part of the graphic rendering elements of the renderstate, graphic primitives, as well as initial graphic rendering commands such as draw() or clear() including their own parameters which initialize the rendering.

In practice, the input set of graphic rendering elements is thus a consistent set of rendering elements that comprises all the graphic rendering elements for the display of a frame. As explained above, the frame may for example represent a complete computer display, a display of an application, or a display of a single application window. For example, the input set of graphic rendering elements may be a frame buffer received by the virtual driver 213.

In general, the input set of rendering elements can be expressed in a graphic API that is used by the first computing device, such as the graphic API 212 if the first computing device is the server 210.

The processing logic 313 is further configured to convert the input set of graphic rendering elements to a transmission set of unique graphic rendering elements belonging to the dictionary 312.

As explained above, the unique graphic rendering elements differ from the graphic rendering element of the input set, at least in that they each have a unique identifier, and a unique graphic rendering element is bound to defined values of parameters while, in the input set of graphic rendering elements, each element is defined by an element type, and if necessary values of parameters, but is not associated with a unique id.

The step of conversion therefore allows obtaining a transmission set of all the unique graphic rendering elements that define the display of the frame.

In a number of embodiments of the invention, the types of the unique graphic rendering elements exactly match the types of the elements of the input set. It is for example the case if the types of the unique graphic rendering elements are defined specifically for graphic API in which the elements of the input set are expressed.

In other embodiments of the invention, the types of elements may be slightly different, thereby requiring transtyping between the types of elements. It is for example the case if the unique graphic rendering elements need to be adaptable to different graphic APIs.

It is of course also possible that the types of the unique graphic rendering elements partially match those of the input set of elements. In such cases, during the conversion, some elements of the transmission set will have the same type than the corresponding elements of the input set, while other will require transtyping.

As unique rendering elements are characterized by a type of element, and values of parameters, the number of possible unique rendering elements is extremely large, due to the large number of possible combinations of parameters.

In a number of embodiments of the invention, the dictionary 312 comprises all the possible unique rendering elements. Upon the conversion between the first and transmission sets of rendering elements, the processing logic 313 therefore identifies which unique rendering element corresponds to an element of the input set, and retrieves its id.

In other embodiments of the invention, upon the conversion of an element of the input set to the transmission set, the corresponding unique rendering element is not necessarily present in the dictionary 312, for example because if its combination of parameters has never been encountered previously.

In these embodiments of the invention, the processing logic 313 may be configured, upon the conversion of a graphic rendering element of the input set to a unique graphic rendering element of the transmission set, to:
- verify if the unique graphic rendering element is already present in the dictionary;
- if and only if it is not already present in the dictionary, create an entry in the dictionary for the unique graphic rendering element, with a new unique id, and an indication that the element has not been already sent to the second computing device.

Therefore, the dictionary 312 can be progressively populated with new unique graphic rendering elements, when new combinations of type of elements, and parameters are identified.

This allows ensuring that a unique rendering element exists for each graphic rendering element that is generated, while limiting the size of the dictionary 312, because only the unique rendering elements that are actually encountered need to be present in it.

Once the transmission set of unique graphic rendering element is obtained, the processing logic 313 is configured to send to the second computing device, for each unique graphic element of the transmission set:
- the unique id of the unique graphic rendering element;
- if the unique graphic rendering element has not been already sent to the second computing device, the definition of the unique graphic rendering element.

Stated otherwise, the unique id of each element of the transmission set is always transmitted to the second computing device, but the definition of the unique graphic rendering element is sent, only if this unique graphic rendering element has not been already sent to the second computing device, this information being available in the dictionary 312 for each unique graphic rendering element.

Indeed, if the definition of the unique graphic rendering element has already been sent to the second computing device, the second computing device is expected to have stored this definition, and the transmission of the unique id is sufficient for the second computing device to retrieve the whole element information. Otherwise, the whole definition of the unique rendering element is sent to the second computing device, so that it obtains all the information necessary to process the element.

Therefore, the second computing device receives all the information necessary to recreate a renderstate, and other parameters (e.g graphic primitives, vertices, etc...) allowing a correct representation of the frame. Meanwhile, the bandwidth consumption between the first and the second computing device is limited, because the definition of the elements (which may comprise a lot of information, in particular if a large number of parameters are involved) is sent once for each unique graphic rendering element. This provides in practice a significant bandwidth reduction because it is worth noting that the graphic rendering elements generated by the applications present a high level of redundancy, the same elements with the same parameters being often generated many times between the different frames. Therefore, the same unique rendering elements are in practice sent many times, thereby significantly reducing the bandwidth consumption compared to a prior art solution that would consist in sending many times the elements of the input set, with the same definitions of parameters.

This also improves the latency for the control of an application, because, as the amount of data to be transmitted for each frame is reduced, the transmission time to retrieve all the data needed to display a frame is reduced.

The invention therefore diminishes both the bandwidth consumption, and latency of a virtualization solution that relies on the streaming of graphic rendering elements.

In a number of embodiments of the invention, some of the graphic parameters are sent in a lossy format. For example, images defining textures can be sent in a compressed format such as JPEG instead of a raw format such as bitmap. Thus, the bandwidth and latency are further reduces, since such lossy formats require less information than lossless formats. Furthermore, it is possible to define a tradeoff between bandwidth gains, and image quality, since usual lossless formats such as JPEG allow different compression levels, for example through different quantization level, a higher compression being generally associated with a lower quality. More generally, any resource used by the graphic rendering can be sent in a lossy format in order to reduce the amount of data that needs to be sent, and thus reduce bandwidth consumption and/or latency experienced by the user.

In a number of embodiments of the invention, such resources can be sent in progressively increasing quality. For example, an image resource can be sent first in a higher compression / lower quality format, then in a lower compression / higher quality format. Therefore, the image in higher compression / lower quality format can be received quickly by the user, which can thus benefit from a first view of the texture using the image with a minimal delay, then, when the image in lower compression / higher quality format is received, the texture can be updated to be displayed in higher quality. Thus, the user benefits from a first view of the scene with a minimal delay, then a view of higher quality as early as possible. Of course, this example is not restricted to images, and can be extended to any kind of resource that can be sent in different qualities/sizes. In addition, the image, or other kind of resource can be sent in more than 2 qualities: it may for example be sent in 2, 3, 4, 5, etc. qualities of increasing size.

In a number of embodiments of the invention, the images, or other resources are automatically sent by the first to the second computing device in an increasing order of quality and size.

In other embodiments of the invention, the images, or other resources are automatically sent by the first to the second computing device only in the lowest size/quality. Then the highest quality/sizes are sent only upon request from the second computing device. The request may be sent using the same communication protocol used for sending the unique graphic rendering elements, or an additional communication protocol, such as an http request.

In a number of embodiments, the processing logic 313 is further configured, for at least one graphic rendering element, to:
- verify if it has an impact on the display of the frame;
- if and only if it has an impact on the display of the frame, add it to the input set.

This test can be performed for all or a part of the elements of the renderstate, and other graphic parameters defining a current scene to display. In practice, only the elements that have an impact on the final display are added in the input set, and thus converted into the transmission set.

This allows a further reduction of the bandwidth required for streaming the graphic rendering elements. Indeed, some graphic rendering elements that does not impact the final display, are not streamed, thereby reducing the amount of data to be sent, without any impact of the display of the frame by the second processing device.

There are many cases wherein a graphic rendering element is generated, without any impact on the final display of the frame. It is for example the case if:
- the graphic rendering element is generated by an application window that is hidden;
- the graphic rendering element is generated for an object that us masked by another object in its foreground;
- ...

The test whereas a graphic rendering element has or not an impact on the frame can be performed deterministically using the graphic API. Indeed, graphic APIs such as OpenGL determine precisely what elements are needed for a given command. The mere application of an API therefore allows determining, for given initial rendering command such as a draw() commands, what elements of the renderstate or other parameters are necessary for the correct execution of the command.

The second computing device 320 comprises an access to at least one display 324. The at least one display may be any display means allowing the user of the second computing device to display the layout of one or more applications. It may for example be a screen, a projector, etc. The at least one display 324 may be either an internal display of the computing device 320, such as the screen of a smartphone, tablet or laptop, or an external display, such as a computer screen, connected through a wire to the computing device 320, if it is a personal computer. The term "an access to" means that the second computing device is able to control what appears on the display, which can be the case either if the display is included in the second computing device or not.

The second computing device further comprises an access to a dictionary 322 of unique graphic rendering elements, comprising, for each unique graphic rendering element:
- a definition of the unique graphic rendering element;
- a unique id.

The dictionary 322 is similar to the dictionary 312, except that the unique rendering elements do not need to be associated, in the dictionary 322, to an indication whether they have been sent to a further device.

According to various embodiments of the invention, the dictionary 322 may be either located in a storage of the second computing device or an external storage, such as a portable hard drive, or a further device located in the same local area network than the second computing device.

The dictionary 322 therefore aims at "mirroring" the information present in the dictionary 312: when new unique rendering elements are sent from the first to the second computing device, they are added to both the dictionary 312 and the dictionary 322. Thus, the first and second computing devices build a shared group of known unique rendering elements, which can be accessed using their id only.

The second computing device further comprises at least one processing logic 313. The at least one processing logic may, for the sake of simplicity, be referred as "the processing logic 313" in this disclosure.

The processing logic 313 is configured to receive the transmission sets of unique graphic rendering elements sent by the first computing device 310.

Since the dictionaries 312 and 322 are updated similarly upon the generation of new unique rendering elements, the transmission set comprises, for each unique graphic rendering element:
- a unique id;
- if the unique graphic rendering element is not already present in said dictionary, a definition of said unique graphic rendering element.

Therefore, the second computing device 320 has the ability to retrieve all the information relative to each unique graphic rendering element, because the definition of the unique graphic rendering element can be retrieved either:
- in the dictionary 322 using the unique id, if it is already present in the dictionary;
- directly from the transmission set otherwise.

Having access to the definition of all the unique graphic rendering elements of the transmission set, the processing logic 313 is further configured to convert said transmission set of unique graphic rendering elements to an output set of graphic rendering elements belonging to said dictionary using, for each unique graphic rendering element, its definition.

This conversion is, in essence, the inverse operation of the conversion performed by the first computing device: the unique rendering elements are converted into graphic rendering elements of an API used by the second computing device 320 for generating graphics. For example, they can be converted into an output set of rendering elements in OpenGL or Direct3D. As explained above, this graphic API is not necessarily the same than the graphic API that was used by the first computing device.

The processing logic 313 is further configured to generate at least one rendering command and a renderstate of a graphic API based on said output set of graphic rendering elements, and trigger the display, on the at least one display 324, of a frame based on said renderstate. In practice, the elements of the output set comprise elements of the renderstate, and initial rendering commands such as draw() or clear(), and other parameters defining the display (e.g primitives, vertices...), so that all the commands, renderstate and parameters needed for an accurate rendering of the 3D scene can be generated directly from the output set, and the initial rendering commands can be called to trigger the display, using the information from the generated commands, renderstate and parameters.

In practice, this step consists in sending the initial rendering commands of the output set of graphic rendering elements, and the generated renderstate and parameters to a processing unit which is able to perform the rendering. In the example of figure 2, initial graphic rendering commands and the renderstate can be sent to the GPU 224.

In a number of embodiments of the invention, the processing logic 313 is further configured to send, separately from said transmission set, to the second computing device 320 synchronization information relative to the dictionary.

In practice, this consists in sending any information relative to the dictionary 312 or its evolution, which does not directly derive from the creation of a new unique graphic rendering element for a transmission set. Such synchronization is applicable to a number of different scenarios.

For example, upon the initialization of the streaming of rendering elements, the dictionary 312 may already comprise unique rendering elements. In such case, an initial version of the dictionary 312 can be sent to the second computing device in order to synchronize the dictionaries 312 and 322 at the start of the connection.

Conversely, it may be in some cases useful to remove unique graphic rendering elements from the dictionary 312. It is for example the case if, over time, the size of the dictionary 312 becomes important. Then, some of the unique rendering elements (for example, the oldest, the less often used, or even all the elements) may be deleted from the dictionary 312. In such case the first computing device 310 can send to the second computing device 320 the ids of the unique rendering elements that have been deleted, so that the same elements can be deleted from the dictionary 322 also.

Another synchronization scenario is used in case of a loss of connexion, and re-connexion, i.e when the second computing device 320 is disconnected from the first computing device, then reconnected. It is possible that, in such case, the first computing device keeps generating rendering elements and adding them to the dictionary 312, so that the dictionaries 312 and 322 are not synchronized when the computing devices re-establish their connexion.

The first computing device can then send, as in the initial connexion, the whole information of dictionary 312 relative to ids and definition of rendering elements to the second computing device.

Alternatively, the dictionaries can be associated with version numbers. In this case, new version numbers can be defined periodically, corresponding to defined states of the dictionary. An indication of the differences between successive versions (for example, unique ids of the unique rendering elements added or removed from one version to the following one) can be stored by the first computing device. Upon the re-connexion of the second computing device, the second computing device can thus indicate what is its current version of the dictionary, and the first computing device can send the additional information to obtain the latest version of the dictionary (unique ids and definition of unique rendering elements added since this last version), so that the dictionaries 312 and 322 are synchronized. This allows ensuring that the dictionaries are synchronized in case of connexion loss, while limiting the amount of data to transmit during the re-connexion, because only the data relative to the unique rendering elements added since the last version known by the second computing device.

The system 300 is provided by means of non-limitative example only of a system according to the invention, and other embodiments are possible.

For example, while only a first and second computing devices are represented figure 3, the first computing device may serve a plurality of second processing devices in parallel.

Instead of a single first processing device, a plurality of first processing devices may also be used. It is for example the case if a plurality of servers serves a plurality of users. In such cases, the dictionary 312 may be a shared dictionary for all users, or a different dictionary may be used for each user.

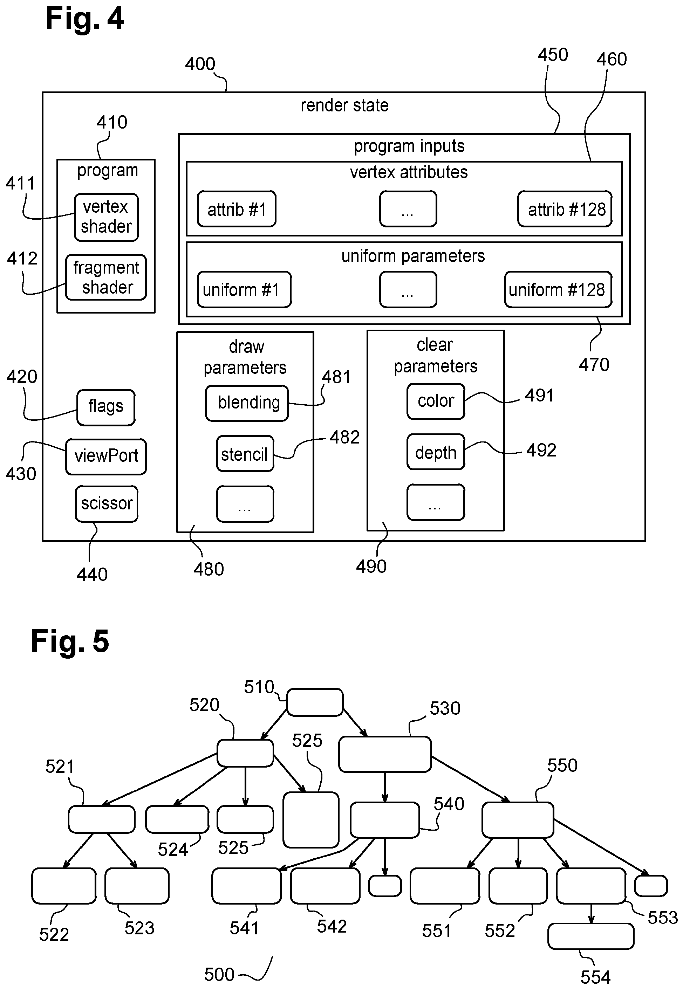

The figure 4 represents an example of hierarchical definition of unique graphic rendering elements in a number of embodiments of the invention.

In a number of embodiments of the invention, the unique graphic rendering elements are defined hierarchically, higher-level unique graphic rendering elements being dependent upon lower-level unique graphic rendering elements.

Stated otherwise, the rendering of some of the unique graphic rendering elements are dependent upon other unique graphic rendering elements. For example, a command "draw" that indicates that a framebuffer need to be drawn is dependent upon a number of other parameters, such as vertex shader parameter that define the shader to display for the framebuffer. In a number of embodiments of the invention, the unique graphic rendering elements are organized hierarchically, so that the rendering of a high level unique rendering element is completely defined using low-level rendering elements the high level unique rendering elements is dependent of.

The figure 4 more specifically represents a hierarchy of elements for a rendering a frame buffer of a program. In general, the rendering of any element of the frame is dependent upon the "renderstate".

It is worth noting that the example of figure 4, as well as the examples presented in the remaining of the disclosure, is based on unique rendering elements linked to the OpenGL graphic API. Some of the unique rendering elements therefore directly map OpenGL elements. The invention is however not restricted to this example and, in other embodiments of the invention, the unique graphic rendering elements may be linked to other graphic APIs, such as the Direct3D API, or be abstract elements that may be linked to different APIs.

In the example of figure 4, a render state 400 of a program is defined by the following sub-parameters:
- Program parameters 410, in particular:
   - Vertex shaders 411;
   - Fragment shaders 412;
- Flags 420;
- ViewPort430;
- Scissor 440;
- Program inputs 450, in particular:
   - Vertex parameters 460;
   - Uniform parameters 470;
- Draw parameters 480, in particular:
   - Blending parameters 481:
   - Stencil parameters 482;
- Clear parameters 490, in particular:
   - Color parameters 491;
   - Depth parameters 492.

The figure 5 displays a tree representation of unique graphic rendering elements in a number of embodiments of the invention.

In a number of embodiments, each unique graphic rendering elements of the transmission set is represented as a node of a tree, and, for each node representing a defined unique graphic rendering element:
- the descendants of said node are the unique graphic rendering elements that have an impact on said graphic unique rendering element;
- said unique graphic rendering element, comprises, as parameters, the unique ids of the unique graphic rendering elements of the children of said node.

A node / unique rendering element in the tree is also called "chunk".

In practice, this consists in organizing the unique graphic rendering elements of the transmission set as a tree such as the tree 500. In the tree 500, each unique rendering element is a node of the tree represented by a box, the signification of the unique graphic elements are given below.

In order to ease the reading of the example, some abbreviations have been used. For example:
- "Mat4" means a 4x4 matrix;
- "Vect2" means a vector comprising 2 elements;
- "Vect4" means a vector comprising 4 elements;
- "Rect" means rectangle;
- "Attribs" means parameters;

The parameter of each element depends directly upon its type.

Furthermore, for each node of the tree/unique rendering element, the unique ids of its child are indicated, thereby allowing an implementation of the tree structure.

For example, the node 510, which represents the root element "draw" has two children elements "setup" 520 and "program inputs" 530, which means that this elements needs all the information brought by the elements 520 and 530 to be completely defined. The same process is repeated iteratively while children nodes are identified. In this example, all the elements of the tree need to be transmitted so that the element draw 510 can be properly executed.

A unique rendering element may be modified (and thus become a new unique rendering element, with a new unique id) if its own parameters are modified, or if the unique rendering elements it is dependent upon are modified.

For example, in the example of figure 5, if, in a next frame, the setup element remain the same, but the program inputs are modified, then the element 520 remain the same, but the element 530 is replaced by a new program input element, associated with a new unique id. As the unique id of one of its child is modified, the draw element 510 is replaced by a new draw element, with a new unique id.

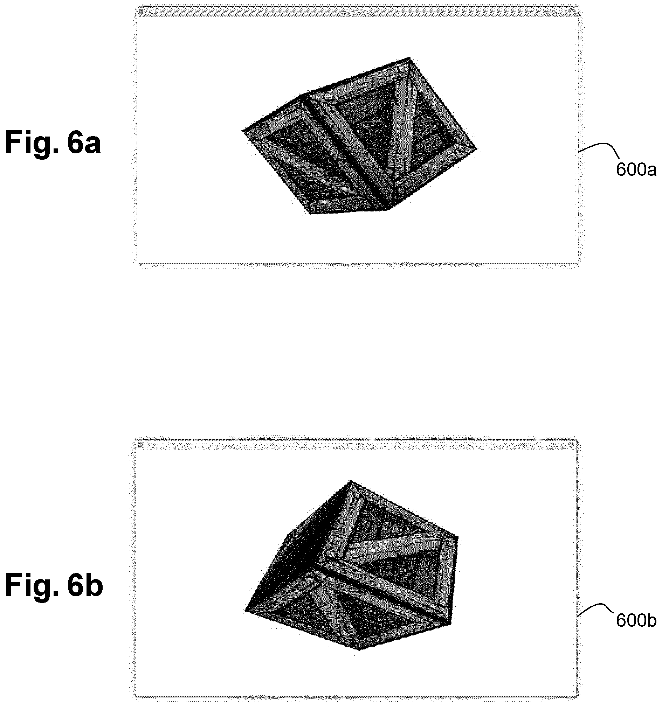

As will be demonstrated, in reference to figure 6a to 7b notably, this provides a very efficient mechanism for limiting the transmission of rendering elements to the rendering to the minimal modifications from the previously known elements.

According to various embodiments of the invention, such a tree may represent either a framebuffer for an application, or the whole content of the display at the output of a window composer. For example, a tree may comprise various subtrees that each correspond to a framebuffer of an application.

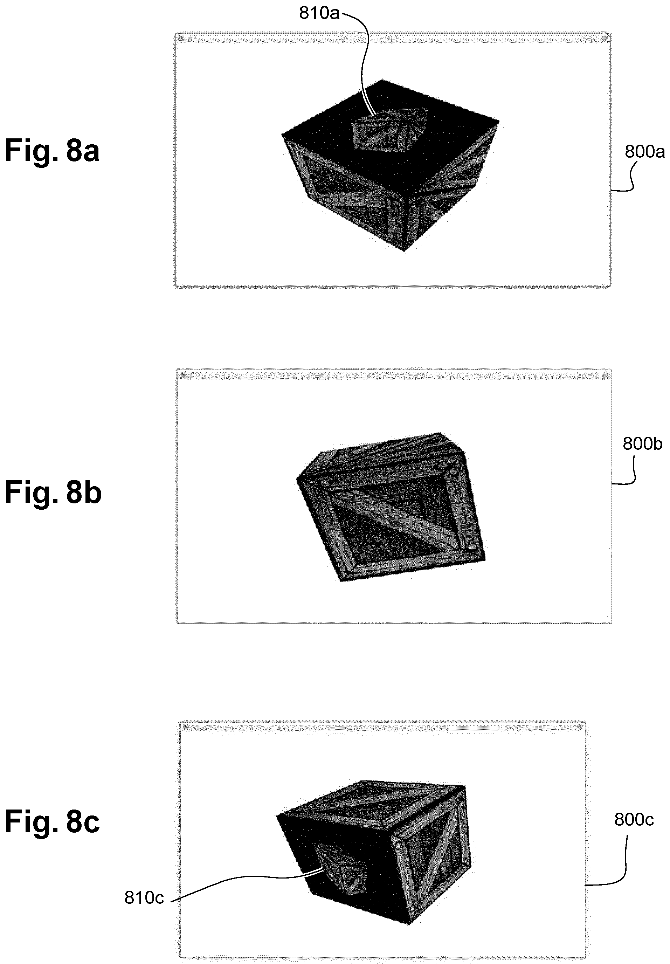

In the example of figure 5, which corresponds to the frame 800a displayed in figure 8a, the elements that would be sent would be the following:
- Not represented in fig. 5: id #1 (Framebuffer content, new)
   ∘ Not represented in fig. 5: cmd type #0 (Clear), id #1 (Clear, new)
      ▪ data : parameters of the clear element
   ∘ Chunk 510 element type #1 (Draw), id #1 (Draw, new)
      ▪ Chunk 520: Id #1 (Setup, new)
         ▪ Chunk 521 : id #1 (Program, new)
            ▪ Chunk 522 id #1 (Shader (vertex), new)
               ▪ Data : definition of the vertex shader
            ▪ Chunk 523 id #2 (Shader (fragment), new)
               ▪ Data : definition of the fragment shader
         ▪ Chunk 524: id #1 (Rectangle (viewport), new)
            ▪ Parameters of the rectangle : (0, 0, 1280, 720)
         ▪ Chunk 525 : id #0 (Rectangle (scissor), disabled)
         ▪ Data comprising values of parameters further defining the Setup element: blending parameters, stencil parameters, depth test parameters, face culling ...
      ▪ Chunk 530 id #1 (ProgramInputs, new)
         ▪ Chunk 540 id #1 (Attribs, new)
            ▪ Definition of the parameters of the vertexes of faces 2 to 6 of the cube, through chunks 541, 542, etc...
         ▪ Chunk 550 id #1 (Uniforms, new)
            ▪ Chunk 551 : id #1 (Uniform (Mat4), new)
               ▪ 4x4 matrix defining the view projection
            ▪ Chunk 552: id #2 (Uniform (Mat4), new)
               ▪ 4x4 matrix defining the object projection
            ▪ Chunk 553 : id #3 (Uniform (Sampler), new)
               ▪ Chunk 554 : id #1 (Image, new)
                  - Definition of the pixel forming the image #1
            ▪ ...

It is worth noting that, in this example, the unique ids are defined for each type of elements. For example, the unique id#1 of node 520 corresponds to the first instance of parameter "Setup", while the unique id#1 of node 521 corresponds to the first instance of parameter "program"; The 3 instances of parameter "Uniform" of chunks 551, 552 and 553 have for example as unique ids id#1, id#2 and id#3 respectively.

The figures 6a and 6b represent an example of two successive frames for which graphic rendering elements can be streamed, in a number of embodiments of the invention, in an example wherein a rotation is applied to a box.

The frame 600a represents a box on which a texture is applied.

The frame 600b represents the same box, on which a rotation has been applied. All the other parameters of the scene remain unchanged.

The faces of the boxes are represented by a first and second superimposed images.

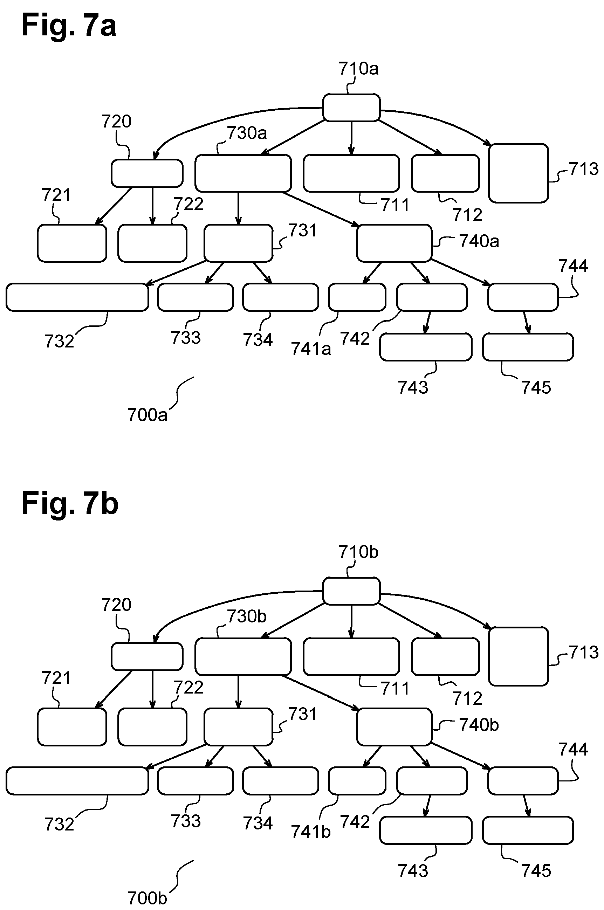

The figures 7a and 7b represent two examples of trees of unique graphic rendering elements representing the two frames represented in figures 6a and 6b.

The tree 700a represents the unique graphic rendering elements that are generated for the frame 600a, and the tree 700b the tree of unique graphic rendering elements that are generated for the frame 600b. We will describe below the unique graphic rendering element that are part of this tree, and that are ultimately sent. The trees are represented using the same convention than the tree 500 of figure 5, wherein each unique graphic rendering element is represented as a node of the tree, also called "chunk".

As the frame 600a is considered as the first frame, all the elements in the tree 700a are new elements, and are thus sent from the first computing device to the second computing device.

The following data and elements are thus sent:
- Not represented in fig. 7a: id #1 (Framebuffer content, new)
   ∘ Not represented in fig. 7a: command type #0 (Clear), id #1 (Clear, new)
      ▪ Data with parameters of the Clear command
   ∘ Chunk 710a command type #1 (Draw), id #1 (Draw, new)
      ▪ Chunk 720 : id #1 (Program, new)
         ▪ Chunk 721 : id #1 (Shader (vertex), new)
            ▪ Data with the definition of the vertex shader
         ▪ Chunk 722 : id #2 (Shader (fragment), new)
            ▪ Data with the definition of fragment shader
      ▪ Chunk 730a : id #1 (ProgramInputs, new)
         ▪ Chunk 731 : id #1 (Attributes, new)
            ▪ Definition of edge attributes, in the nodes 732, 733 and 734 ;
         ▪ Chunk 740a : id #1 (Uniform parameters, new)
            ▪ Chunk 741a : id #1 (Uniform (Mat4), new)
               ▪ content of the matrix 4x4 representing the rotation of the box in frame 700a ;
            ▪ Chunk 742: id #2 (Uniform (Sampler), new)
               ▪ Chunk 743 : id #1 (Image, new)
                  • Data with the pixels that define the first image that defines the texture of the faces of the box
            ▪ Chunk 744 : id #3 (Uniform (Sampler), new)
               ▪ Chunk 745: id #2 (Image, new)
                  • Data with the pixels that define the second image that defines the texture of the faces of the box
      ▪ Chunk 711 : id #1 (Rect (viewport), new)
         ▪ (0, 0, 1280, 720)
      ▪ Chunk 712 : id #0 (Rect (scissor), disabled)
      ▪ Chunk 713: id#0 (DrawParameters, new) general draw parameters, such as blending parameters, stencil parameters including the definition of the parameters

As explained above, he only difference between the two frames 700a and 700b consists in the change of the rotation of the box. Therefore, most of the graphic rendering elements that define the frame 600b are the same than those that define the frame 600a. The tree 700b is a tree of unique graphic rendering elements defining frame 600b.

The change of the rotation of the box is reflected by the replacement of the chunk 741a by the chunk 741b that defines a new rotation matrix. The parent and grandparents chunks 710a, 730a and 740a are therefore replaced by chunks 710b, 730b and 740b, but this only aims at reflecting the change in the respective lower level elements.

In a number of embodiments of the invention, the at least one processing logic is configured to include in the transmission set all the unique graphic rendering elements in said tree, except those that correspond to descendants of nodes corresponding to unique graphic rendering elements that have been already sent to the second computing device.

Stated otherwise, if a unique rendering element has already been sent to the second computing device, and is known by it, this also means that the unique ids that are referenced by this unique rendering element, as well as the corresponding definition of elements, do not even need to be integrated in the transmission set.

The unique graphic rendering elements that are inserted in the transmission set for the second frame 600b are thus the following:
- Not represented in fig. 7b : Id #2 Framebuffer content, new)
   ∘ Not represented in fig. 7b : command type #0 (Clear), id #1 (Clear)
   ∘ Chunk 710b: command type #1 (Draw), id #2 (Draw, new)
      ▪ Chunk 720 : id #1 (Program)
      ▪ Chunk 730b : id #2 (ProgramInputs, new)
         ▪ Chunk 731 : id #1 (Attribs)
         ▪ Chunk 740b id #2 (Uniforms, new)
            ▪ Chunk 741b: id #4 (Uniform (Mat4), new)
               ▪ Content of the corresponding 4x4 matrix
            ▪ Chunk 742 : id #2 (Uniform (Sampler))
            ▪ Chunk 744 : id #3 (Uniform (Sampler))
      ▪ Chunk 711 : id #1 (Rect (viewport))
      ▪ Chunk 712 id #0 (Rect (scissor), disabled)
      ▪ Chunk 713: id#0 (DrawParameters)

This example makes apparent that the amount of data to be sent is greatly reduced. For example, as the second device already received all the definitions of the chunks 720 (including the reference to chunks 721 and 722), 721 and 722, the simple send of the unique id of the chunk 720 (i.e id #1 (Program)) is sufficient for the second computing device to retrieve the whole subtree formed by the chunks 720, 721 and 722. Therefore, the amount of data required to send this unique id is far less important that the amount of data that would be required to send all the unique ids and definitions of unique graphic rendering elements for all the chunks 720, 721 and 722. Similarly, only the unique ids of chunks 731 (id #1 (Attribs)), 721 (id #2 (Uniform (Sampler))) and 722 (id #3 (Uniform (Sampler))) need to be sent for representing the subtrees formed by the chunks (731, 732, 733, 734), (742, 743) and (744, 745) respectively. The unique graphic rendering elements represented by the chunks 732, 733, 734, 743, 745 are therefore not even included in the transmission set.

This example demonstrates the ability of embodiments of the invention to take advantage of the redundancy between graphic rendering elements between the successive frames to drastically reduce the amount of data to be sent, and therefore reduce the bandwidth requirements, and latency for performing streaming of graphic rendering elements.

Figures 8a, 8b and 8c represent an example of three successive frames for which graphic rendering elements can be streamed, in a number of embodiments of the invention, in an example wherein a rotation is applied to a box leading to the disappearance of a texture in the rendering.

The frame 800a represents a box on which a texture is applied.

The frame 800b represents the same box, on which a rotation has been applied. All the other parameters of the scene remain unchanged.

The frame 800c represents the same box, on which a further rotation has been applied.

A texture 810a, where a smaller cube is apparent in the frame 800a, then disappears in the frame 800b because of the rotation, and reappears 810c in frame 800c because of the further rotation.

In this example, the smaller cube is not an image texture, but is itself generated by the 3D rendering. Therefore, the rendering commands that generate the rendering of the big cube reference the rendering commands that generate the rendering of the small cube.

The small cube appears on one face only of the big cube. By convention, the face that contains the small cube will be considered as the first face (face 1), and the other faces will be noted as faces 2 to 6.

Assuming that the frame 800a is the first frame that is sent, and that the dictionaries of unique rendering commands are previously empty, the data sent for the first frame 800a could be the following:
- id #1 (Framebuffer content, new)
   ∘ number of commands : 3
   ∘ cmd type #0 (Clear), id #1 (Clear, new)
      ▪ ... parameters of the command Clear ...
   ∘ cmd type #1 (Draw), id #1 (Draw, new) : this sub-tree defines the rendering of the 5 faces of the big cube, which do not contain the small cube
      ▪ Id #1 (Setup, new)
         ▪ id #1 (Program, new)
            ▪ id #1 (Shader (vertex), new)
               ▪ ... definition of the vertex shader ...
            ▪ id #2 (Shader (fragment), new)
               ▪ ... definition of the fragment shader ...
         ▪ id #1 (Rect (viewport), new)
            ▪ (0, 0, 1280, 720)
         ▪ id #0 (Rect (scissor), disabled)
         ▪ ... blending parameters, stencil parameters, depth test parameters, face culling ...
      ▪ id #1 (ProgramInputs, new)
         ▪ id #1 (Attribs, new)
            ▪ ... définition of the attributes of the vertices of faces 2 à 6 of the big cube ...
         ▪ id #1 (Uniforms, new)
            ▪ id #1 (Uniform (Mat4), new)
               ▪ content of the 4x4 rotation matrix
            ▪ id #2 (Uniform (Sampler), new)
               ▪ id #1 (Image, new)
                  - pixels forming the texture of faces 2 to 6
   ∘ cmd type #1 (Draw), id #2 (Draw, new) - this subtree defines the rendering of face 1 that contains the small cube
      ▪ id #1 (Setup)
      ▪ id #2 (ProgramInputs, new)
         ▪ id #2 (Attribs, new)
            ▪ ... définition of the attributes of the vertices of the 1^{st} face of the cube ...
         ▪ id #2 (Uniforms, new)
            ▪ id #1 (Uniform (Mat4))
            ▪ id #3 (Uniform (Sampler), new)
               ▪ id #2 (Framebuffer content, new)
                  - cmd type #0 (Clear), id #1 (Clear)
                  - cmd type #1 (Draw), id #3 (Draw, new) - rendering of the small cube 810a
                     ∘ id #1 (Setup)
                     ∘ id #3 (ProgramInputs, new)
                        ▪ id #3 (Attribs, new) ... definition of the attributes of the small cube ...
                        ▪ id #1 (Uniforms)

This tree structure makes apparent the relationship between a plurality of rendering commands, when the rendering of an element is dependent upon the rendering of another element. In this example, the rendering of the small cube 810a (triggered by the draw command id#3) is used for the rendering of the big cube, triggered by the draw command id#1, then the draw command id#2 for the first face.

In these examples, when a node is marked "new", this means that its definition is sent to the second device to be added to the dictionary. Otherwise, the node is already known and only its unique id (along with the type of element, since the unique ids are generated by types of elements) need to be sent.

For the second frame 800b, where the small cube is not apparent, the transmission set below could be sent:
- id #4 (Framebuffer content, new)
   ∘ Number of commands : 2
   ∘ cmd type #0 (Clear), id #1 (Clear)
   ∘ cmd type #1 (Draw), id #4 (Draw, new)
      ▪ id #1 (Setup)
      ▪ id #4 (ProgramInputs, new)
         ▪ id #1 (Attribs)
         ▪ id #3 (Uniforms, new)
            ▪ id #4 (Uniform (Mat4), new)
               ▪ content of the new 4x4 rotation matrix
            ▪ id #2 (Uniform (Sampler))

Here, the node id#1 (Attribs) corresponds to an element that has already been sent for frame 800a, and that contains all the definitions of the faces 2 to 6 of the cube. Therefore, only little information needs to be sent to display this frame. It is also worth noting that, as the rotation has hidden the face 1 containing the small cube, the draw id#2 and id#3 do not even need to be sent.

For the frame 800c, as the rotation has been again modified, and the face 1 with the small cube is again visible, the data sent could be the following:
- id #5 (Framebuffer content, new)
   ∘ Numbr of commands : 3
   ∘ cmd type #0 (Clear), id #1 (Clear)
   ∘ cmd type #1 (Draw), id #5 (Draw, new)
      ▪ id #1 (Setup)
      ▪ id #5 (ProgramInputs, new)
         ▪ id #1 (Attribs)
         ▪ id #4 (Uniforms, new)
            ▪ id #5 (Uniform (Mat4), new)
               • content of the 4x4 rotation matrix
            ▪ id #2 (Uniform (Sampler))
   ∘ cmd type #1 (Draw), id #6 (Draw, new)
      ▪ id #1 (Setup)
      ▪ id #6 (ProgramInputs, new)
         ▪ id #2 (Attribs)
         ▪ id #5 (Uniforms, new)
            ▪ id #5 (Uniform (Mat4))
            ▪ id #4 (Uniform (Sampler), new)
               ▪ id #6 (Framebuffer content, new)
                  - cmd type #0 (Clear), id #1 (Clear)
                  - cmd type #1 (Draw), id #7 (Draw, new)
                     ∘ id #1 (Setup)
                     ∘ id #7 (ProgramInputs, new)
                        ▪ id #3 (Attribs)
                        ▪ id #4 (Uniforms)

Here, the draw id#5 draws the faces 2 to 6, and the draw id#6 draws the face 1 including the small cube. The draw of the faces 2 to 6, and face 1 are respectively defined by the Attribs#1 and Attribs#2 elements. As their definition has already been sent for frame 800a, only their unique id need to be sent.

This example demonstrates the ability of the invention to send only unique graphic rendering elements that have an actual impact on the final display, and to limit the quantity of information to send, by referencing information that has been previously sent by its unique id.

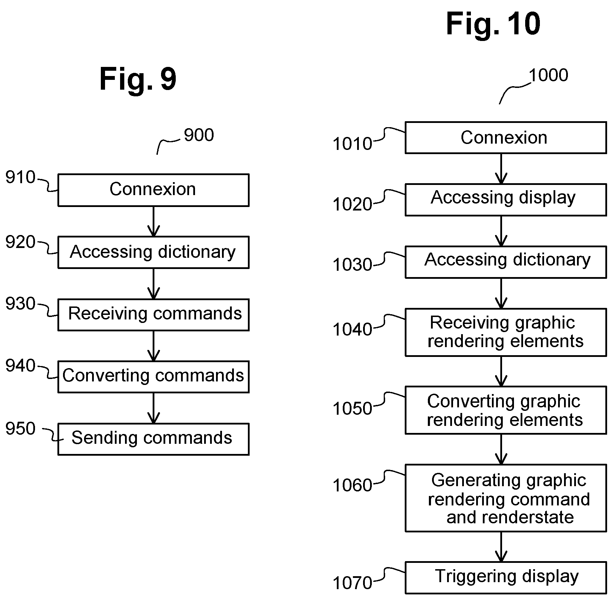

The figure 9 represents an example of computer-implemented method executable by a first computing device in a number of embodiments of the invention.

All the steps of the method 900 are executed by a first computing device such as the device 310.

The method 900 comprises a first step 910 of establishing a connection with a second computing device such as the computing device 320.

The method 900 comprises a second step 920 of accessing a dictionary of unique graphic rendering elements, comprising, for each unique graphic rendering element:
- a definition of the unique graphic rendering element;
- a unique id;
- an indication whether the definition of the unique graphic rendering element has been already sent to the second computing device.

The method 900 comprises a third step 930 of determining, for a frame to be displayed by the second computing device, an input set of graphic rendering elements using at least one rendering command and a renderstate of a graphic API for said frame.

The method 900 comprises a fourth step 940 of converting said input set of graphic rendering elements to a transmission set of unique graphic rendering elements belonging to said dictionary.

The method 900 comprises a fifth step 950 of sending to the second computing device, for each unique graphic element of the transmission set:
- the unique id of the unique graphic rendering element;
- if the unique graphic rendering element has not been already sent to the second computing device, the definition of the unique graphic rendering element.

All the embodiments discussed above are respectively applicable to the method 900.

The figure 10 represents an example of computer-implemented method executable by a second computing device in a number of embodiments of the invention.

All the steps of the method 900 are executed by a second computing device such as the device 320.

The method 1000 comprises a first step 1010 of establishing a connection with a first computing device, such as the first computing device 310.

The method 1000 comprises a second step 1020 of accessing at least one display.

The method 1000 comprises a third step 1030 of accessing a dictionary of unique graphic rendering elements, comprising, for each unique graphic rendering element:
- a definition of the unique graphic rendering element;
- a unique id;

The method 1000 comprises a fourth step 1040 of receiving, from said first computing device, a transmission set of unique graphic rendering elements for a frame to be displayed by said second computing device, said transmission set comprising, for each unique graphic rendering element:
- a unique id;
- if the unique graphic rendering element is not already present in said dictionary, a definition of said unique graphic rendering element.

The method 1000 comprises a fifth step 1050 of converting said transmission set of unique graphic rendering elements to an output set of graphic rendering elements belonging to said dictionary using, for each unique graphic rendering element, its definition as found in the dictionary or received from the first processing device.

The method 1000 comprises a sixth step 1060 of generating at least one rendering command and a renderstate of a graphic API based on said output set of graphic rendering elements.

The method 1000 comprises a seventh step 1070 of triggering the display, on said at least one display, of the frame based on said renderstate.

The examples described above are given as non-limitative illustrations of embodiments of the invention. They do not in any way limit the scope of the invention which is defined by the following claims.

## Claims

1. A first computing device (310) comprising:
- a communication endpoint (311) configured to establish a connection with a second computing device (320), the first computing device being responsible for the execution of one or more applications that are controlled from the second computing device;
- an access to a dictionary (312) of unique graphic rendering elements, a unique graphic rendering element being a graphic rendering command or a graphic rendering parameter, the dictionary comprising, for each unique graphic rendering element:
- a definition of the unique graphic rendering element, a definition of the unique graphic rendering element comprising a type of element, and a value of parameters associated with the type of element;
- a unique id;
- an indication whether the definition of the unique graphic rendering element has been already sent to the second computing device;
- at least one processing logic (313) configured to:
- determine, for a frame to be displayed by the second computing device, an input set of graphic rendering elements using at least one rendering command and a renderstate of a graphic API for said frame;
- convert said input set of graphic rendering elements to a transmission set of unique graphic rendering elements belonging to said dictionary;
- send to the second computing device, for each unique graphic element of the transmission set:
- the unique id of the unique graphic rendering element;
- if the unique graphic rendering element has not been already sent to the second computing device, the definition of the unique graphic rendering element,
the sent information being used by the second computing device to display the frame.

2. The first computing device of claim 1, wherein said at least one processing logic is further configured, for at least one graphic rendering element, to:
- verify if it has an impact on the display of the frame;
- if and only if it has an impact on the display of the frame, add it to the input set.

3. The first computing device of one of claims 1 to 2, wherein said at least one processing logic is further configured, upon the conversion of a graphic rendering element of the input set to a unique graphic rendering element of the transmission set, to:
- verify if the unique graphic rendering element is already present in the dictionary;
- if and only if it is not already present in the dictionary, create an entry in the dictionary for the unique graphic rendering element, with a new unique id, and an indication that the element has not been already sent to the second computing device.

4. The first computing device of any of the preceding claims, wherein said least one processing logic (313) is configured to execute a virtual graphic driver (216), and wherein the input set of graphic rendering elements of a frame to be displayed by the second computing device is a frame buffer to be displayed, generated by a window composer (215).

5. The first computing device of any of the preceding claims, wherein:
- the dictionary comprises, for each unique rendering element, a bit field;
- the second computing device is associated with a defined position in the bit field;
- the indication whether the definition of the unique graphic rendering element has been already sent to the second computing device is provided by the value of the bit at the defined position in the bit field.

6. The first computing device of any of the preceding claims, wherein the at least one processing logic is further configured to send, separately from said transmission set, to the second computing device synchronization information relative to the dictionary.

7. The first computing device of any or the preceding claims, wherein the unique graphic rendering elements are defined hierarchically, higher-level unique graphic rendering elements being dependent upon lower-level unique graphic rendering elements.

8. The first computing device of any or the preceding claims, wherein each unique graphic rendering element of the transmission set is represented as a node of a tree, and, for each node representing a defined unique graphic rendering element:
- the descendants of said node are the unique graphic rendering elements that have an impact on said graphic unique rendering element;
- said unique graphic rendering element, comprises as parameters, the unique ids of the unique graphic rendering elements of the children of said node.

9. The first computing device of claim 8, wherein the at least one processing logic is configured to include in the transmission set all the unique graphic rendering elements in said tree, except those that correspond to descendants of nodes corresponding to unique graphic rendering elements that have been already sent to the second computing device.

10. A second computing device (320) comprising:
- a communication endpoint (321) configured to establish a connection with a first computing device (310), the first computing device being responsible for the execution of one or more applications that are controlled from the second computing device;
- an access to at least one display (324);
- an access to a dictionary (322) of unique graphic rendering elements, a unique graphic rendering element being a graphic rendering command or a graphic rendering parameter, the dictionary comprising, for each unique graphic rendering element:
- a definition of the unique graphic rendering element, a definition of the unique graphic rendering element comprising a type of element, and a value of parameters associated with the type of element;
- a unique id;
- at least one processing logic (313) configured to:
- receive, from said first computing device, a transmission set of unique graphic rendering elements for a frame to be displayed by said second computing device, said transmission set comprising, for each unique graphic rendering element:
- a unique id;
- if the unique graphic rendering element is not already present in said dictionary, a definition of said unique graphic rendering element;
- convert said transmission set of unique graphic rendering elements to an output set of graphic rendering elements belonging to said dictionary using, for each unique graphic rendering element, its definition as found in the dictionary or received from the first processing device;
- generate at least one rendering command and a renderstate of a graphic API based on said output set of graphic rendering elements;
- trigger the display, on said at least one display, of the frame based on said renderstate.

11. A computing system (300) comprising:
- a first computing device according to one of claims 1 to 9;
- a second computing device according to 10.

12. A computer-implemented method (900) comprising, by a first computing device (310):
- establishing (910) a connection with a second computing device (320), the first computing device being responsible for the execution of one or more applications that are controlled from the second computing device;
- accessing (920) a dictionary of unique graphic rendering elements, a unique graphic rendering element being a graphic rendering command or a graphic rendering parameter, the dictionary comprising, for each unique graphic rendering element:
- a definition of the unique graphic rendering element, a definition of the unique graphic rendering element comprising a type of element, and a value of parameters associated with the type of element;
- a unique id;
- an indication whether the definition of the unique graphic rendering element has been already sent to the second computing device;
- determining (930), for a frame to be displayed by the second computing device, an input set of graphic rendering elements using at least one rendering command and a renderstate of a graphic API for said frame;
- converting (940) said input set of graphic rendering elements to a transmission set of unique graphic rendering elements belonging to said dictionary;
- sending (950) to the second computing device, for each unique graphic element of the transmission set:
- the unique id of the unique graphic rendering element;
- if the unique graphic rendering element has not been already sent to the second computing device, the definition of the unique graphic rendering element,
the sent information being used by the second computing device to display the frame.

13. A computer-implemented method (1000) comprising, by a second computing device (320):
- establishing (1010) a connection with a first computing device (310), the first computing device being responsible for the execution of one or more applications that are controlled from the second computing device;
- accessing (1020) at least one display;
- accessing (1030) a dictionary of unique graphic rendering elements, a unique graphic rendering element being a graphic rendering command or a graphic rendering parameter, the dictionary comprising, for each unique graphic rendering element:
- a definition of the unique graphic rendering element, a definition of the unique graphic rendering element comprising a type of element, and a value of parameters associated with the type of element;
- a unique id;
- receiving (1040), from said first computing device, a transmission set of unique graphic rendering elements for a frame to be displayed by said second computing device, said transmission set comprising, for each unique graphic rendering element:
- a unique id;
- if the unique graphic rendering element is not already present in said dictionary, a definition of said unique graphic rendering element;
- converting (1050) said transmission set of unique graphic rendering elements to an output set of graphic rendering elements belonging to said dictionary using, for each unique graphic rendering element, its definition as found in the dictionary or received from the first processing device;
- generating (1060) at least one rendering command and a renderstate of a graphic API based on said output set of graphic rendering elements;
- triggering (1070) the display, on said at least one display, of the frame based on said renderstate.

14. A computer program product, stored on a non-transitory computer readable medium, comprising computer code instructions for executing a method according to one of claims 12 or 13.

## Patentansprüche

1. Erste Computervorrichtung (310), umfassend:
- einen Kommunikationsendpunkt (311), der dafür konfiguriert ist, eine Verbindung mit einer zweiten Computervorrichtung (320) herzustellen, wobei die erste Computervorrichtung für die Ausführung einer oder mehrerer Anwendungen zuständig ist, die von der zweiten Computervorrichtung gesteuert werden;
- einen Zugriff auf ein Wörterbuch (312) von eindeutigen Grafik-Rendering-Elementen, wobei ein eindeutiges Grafik-Rendering-Element ein Grafik-Rendering-Befehl oder ein Grafik-Rendering-Parameter ist, wobei das Wörterbuch für jedes eindeutige Grafik-Rendering-Element umfasst:
- eine Definition des eindeutigen Grafik-Rendering-Elements, wobei eine Definition des eindeutigen Grafik-Rendering-Elements einen Elementtyp und einen Wert von Parametern, die mit dem Elementtyp verknüpft sind, umfasst;
- eine eindeutige Kennung;
- eine Angabe, ob die Definition des eindeutigen Grafik-Rendering-Elements bereits an die zweite Computervorrichtung gesendet worden ist;
- mindestens eine Verarbeitungslogik (313), die dafür konfiguriert ist:
- für ein durch die zweite Computervorrichtung anzuzeigendes Einzelbild unter Verwendung mindestens eines Rendering-Befehls und eines Rendering-Status einer Grafik-API für das Einzelbild einen Eingabesatz von Grafik-Rendering-Elementen zu bestimmen;
- den Eingabesatz von Grafik-Rendering-Elementen in einen Übertragungssatz von eindeutigen Grafik-Rendering-Elementen, die zu dem Wörterbuch gehören, zu konvertieren;
- für jedes eindeutige Grafikelement des Übertragungssatzes Folgendes an die zweite Computervorrichtung zu senden:
- die eindeutige Kennung des eindeutigen Grafik-Rendering-Elements;
- wenn das eindeutige Grafik-Rendering-Element noch nicht an die zweite Computervorrichtung gesendet worden ist, die Definition des eindeutigen Grafik-Rendering-Elements,
wobei die gesendeten Informationen durch die zweite Computervorrichtung verwendet werden, um das Einzelbild anzuzeigen.

2. Erste Computervorrichtung nach Anspruch 1, wobei die mindestens eine Verarbeitungslogik ferner dafür konfiguriert ist, für mindestens ein Grafik-Rendering-Element:
- zu überprüfen, ob es Auswirkungen auf die Anzeige des Einzelbilds hat;
- wenn und nur wenn es Auswirkungen auf die Anzeige des Einzelbilds hat, es zu dem Eingabesatz hinzuzufügen.

3. Erste Computervorrichtung nach einem der Ansprüche 1 bis 2, wobei die mindestens eine Verarbeitungslogik ferner dafür konfiguriert ist, bei der Konvertierung eines Grafik-Rendering-Elements des Eingabesatzes in ein eindeutiges Grafik-Rendering-Element des Übertragungssatzes:
- zu überprüfen, ob das eindeutige Grafik-Rendering-Element bereits im Wörterbuch vorhanden ist;
- wenn und nur wenn es noch nicht im Wörterbuch vorhanden ist, einen Eintrag im Wörterbuch für das eindeutige Grafik-Rendering-Element mit einer neuen eindeutigen Kennung und einer Angabe, dass das Element noch nicht an die zweite Computervorrichtung gesendet worden ist, zu erzeugen.

4. Erste Computervorrichtung nach einem der vorstehenden Ansprüche, wobei die mindestens eine Verarbeitungslogik (313) dafür konfiguriert ist, einen virtuellen Grafiktreiber (216) auszuführen, und wobei der Eingabesatz von Grafik-Rendering-Elementen eines durch die zweite Computervorrichtung anzuzeigenden Einzelbildes ein anzuzeigender Framebuffer ist, der durch einen Fenster-Composer (215) erzeugt wird.

5. Erste Computervorrichtung nach einem der vorstehenden Ansprüche, wobei:
- das Wörterbuch für jedes eindeutige Rendering-Element ein Bitfeld umfasst;
- die zweite Computervorrichtung mit einer definierten Position in dem Bitfeld verknüpft ist;
- die Angabe, ob die Definition des eindeutigen Grafik-Rendering-Elements bereits an die zweite Computervorrichtung gesendet worden ist, durch den Wert des Bits an der definierten Position in dem Bitfeld bereitgestellt wird.

6. Erste Computervorrichtung nach einem der vorhergehenden Ansprüche, wobei die mindestens eine Verarbeitungslogik ferner dafür konfiguriert ist, Synchronisationsinformationen bezüglich des Wörterbuchs getrennt von dem Übertragungssatz an die zweite Computervorrichtung zu senden.

7. Erste Computervorrichtung nach einem der vorhergehenden Ansprüche, wobei die eindeutigen Grafik-Rendering-Elemente hierarchisch definiert sind, wobei eindeutige Grafik-Rendering-Elemente höherer Ebene von eindeutigen Grafik-Rendering-Elementen niederer Ebene abhängig sind.

8. Erste Computervorrichtung nach einem der vorhergehenden Ansprüche, wobei jedes eindeutige Grafik-Rendering-Element des Übertragungssatzes als ein Knoten eines Baums dargestellt wird, und für jeden Knoten, der ein definiertes eindeutiges Grafik-Rendering-Element darstellt:
- die untergeordneten Knoten des Knotens die eindeutigen Grafik-Rendering-Elemente sind, die Auswirkungen auf das eindeutige Grafik-Rendering-Element haben;
- das eindeutige Grafik-Rendering-Element als Parameter die eindeutigen Kennungen der eindeutigen Grafik-Rendering-Elemente der unmittelbar untergeordneten Knoten des Knotens umfasst.

9. Erste Computervorrichtung nach Anspruch 8, wobei die mindestens eine Verarbeitungslogik dafür konfiguriert ist, alle eindeutigen Grafik-Rendering-Elemente in dem Baum außer denen, die untergeordneten Knoten von Knoten entsprechen, welche eindeutigen Grafik-Rendering-Elementen entsprechen, die bereits an die zweite Computervorrichtung gesendet worden sind, in den Übertragungssatz einzuschließen.

10. Zweite Computervorrichtung (320), umfassend:
- einen Kommunikationsendpunkt (321), der dafür konfiguriert ist, eine Verbindung mit einer ersten Computervorrichtung (310) herzustellen, wobei die erste Computervorrichtung für die Ausführung einer oder mehrerer Anwendungen zuständig ist, die von der zweiten Computervorrichtung gesteuert werden;
- einen Zugriff auf mindestens eine Anzeige (324);
- einen Zugriff auf ein Wörterbuch (322) von eindeutigen Grafik-Rendering-Elementen, wobei ein eindeutiges Grafik-Rendering-Element ein Grafik-Rendering-Befehl oder ein Grafik-Rendering-Parameter ist, wobei das Wörterbuch für jedes eindeutige Grafik-Rendering-Element umfasst:
- eine Definition des eindeutigen Grafik-Rendering-Elements, wobei eine Definition des eindeutigen Grafik-Rendering-Elements einen Elementtyp und einen Wert von Parametern, die mit dem Elementtyp verknüpft sind, umfasst;
- eine eindeutige Kennung;
- mindestens eine Verarbeitungslogik (313), die dafür konfiguriert ist:
- von der ersten Computervorrichtung einen Übertragungssatz von eindeutigen Grafik-Rendering-Elementen für ein durch die zweite Computervorrichtung anzuzeigendes Einzelbild zu empfangen, wobei der Übertragungssatz für jedes eindeutige Grafik-Rendering-Element umfasst:
- eine eindeutige Kennung;
- wenn das eindeutige Grafik-Rendering-Element noch nicht in dem Wörterbuch vorhanden ist, eine Definition des eindeutigen Grafik-Rendering-Elements;
- den Übertragungssatz von eindeutigen Grafik-Rendering-Elementen in einen Ausgabesatz von Grafik-Rendering-Elementen, die zu dem Wörterbuch gehören, zu konvertieren, wobei für jedes eindeutige Grafik-Rendering-Element dessen Definition verwendet wird, wie sie in dem Wörterbuch gefunden oder von der ersten Verarbeitungsvorrichtung empfangen wird;
- auf der Grundlage des Ausgabesatzes von Grafik-Rendering-Elementen mindestens einen Rendering-Befehl und einen Rendering-Status einer Grafik-API zu erzeugen;
- auf der Grundlage des Rendering-Status die Anzeige des Einzelbilds auf der mindestens einen Anzeige auszulösen.

11. Computersystem (300), umfassend:
- eine erste Computervorrichtung nach einem der Ansprüche 1 bis 9;
- eine zweite Computervorrichtung nach 10.

12. Computerimplementiertes Verfahren (900), umfassend, durch eine erste Computervorrichtung (310):
- das Herstellen (910) einer Verbindung mit einer zweiten Computervorrichtung (320), wobei die erste Computervorrichtung für die Ausführung einer oder mehrerer Anwendungen zuständig ist, die von der zweiten Computervorrichtung gesteuert werden;
- das Zugreifen (920) auf ein Wörterbuch von eindeutigen Grafik-Rendering-Elementen, wobei ein eindeutiges Grafik-Rendering-Element ein Grafik-Rendering-Befehl oder ein Grafik-Rendering-Parameter ist, wobei das Wörterbuch für jedes eindeutige Grafik-Rendering-Element Folgendes umfasst:
- eine Definition des eindeutigen Grafik-Rendering-Elements, wobei eine Definition des eindeutigen Grafik-Rendering-Elements einen Elementtyp und einen Wert von Parametern, die mit dem Elementtyp verknüpft sind, umfasst;
- eine eindeutige Kennung;
- eine Angabe, ob die Definition des eindeutigen Grafik-Rendering-Elements bereits an die zweite Computervorrichtung gesendet worden ist;
- für ein durch die zweite Computervorrichtung anzuzeigendes Einzelbild, Bestimmen (930) eines Eingabesatzes von Grafik-Rendering-Elementen unter Verwendung mindestens eines Rendering-Befehls und eines Rendering-Status einer Grafik-API für das Einzelbild;
- Konvertieren (940) des Eingabesatzes von Grafik-Rendering-Elementen in einen Übertragungssatz von eindeutigen Grafik-Rendering-Elementen, die zu dem Wörterbuch gehören;
- für jedes eindeutige Grafikelement des Übertragungssatzes, Senden (950) von Folgendem an die zweite Computervorrichtung:
- die eindeutige Kennung des eindeutigen Grafik-Rendering-Elements;
- wenn das eindeutige Grafik-Rendering-Element noch nicht an die zweite Computervorrichtung gesendet worden ist, die Definition des eindeutigen Grafik-Rendering-Elements,
wobei die gesendeten Informationen durch die zweite Computervorrichtung verwendet werden, um das Einzelbild anzuzeigen.

13. Computerimplementiertes Verfahren (1000), umfassend, durch eine zweite Computervorrichtung (320):
- das Herstellen (1010) einer Verbindung mit einer ersten Computervorrichtung (310), wobei die erste Computervorrichtung für die Ausführung einer oder mehrerer Anwendungen zuständig ist, die von der zweiten Computervorrichtung gesteuert werden;
- das Zugreifen (1020) auf mindestens eine Anzeige;
- das Zugreifen (1030) auf ein Wörterbuch von eindeutigen Grafik-Rendering-Elementen, wobei ein eindeutiges Grafik-Rendering-Element ein Grafik-Rendering-Befehl oder ein Grafik-Rendering-Parameter ist, wobei das Wörterbuch für jedes eindeutige Grafik-Rendering-Element umfasst:
- eine Definition des eindeutigen Grafik-Rendering-Elements, wobei eine Definition des eindeutigen Grafik-Rendering-Elements einen Elementtyp und einen Wert von Parametern, die mit dem Elementtyp verknüpft sind, umfasst;
- eine eindeutige Kennung;
- das Empfangen (1040) eines Übertragungssatzes von eindeutigen Grafik-Rendering-Elementen für ein durch die zweite Computervorrichtung anzuzeigendes Einzelbild von der ersten Computervorrichtung, wobei der Übertragungssatz für jedes eindeutige Grafik-Rendering-Element Folgendes umfasst:
- eine eindeutige Kennung;
- wenn das eindeutige Grafik-Rendering-Element noch nicht in dem Wörterbuch vorhanden ist, eine Definition des eindeutigen Grafik-Rendering-Elements;
- das Konvertieren (1050) des Übertragungssatzes von eindeutigen Grafik-Rendering-Elementen in einen Ausgabesatz von Grafik-Rendering-Elementen, die zu dem Wörterbuch gehören, wobei für jedes eindeutige Grafik-Rendering-Element dessen Definition verwendet wird, wie sie in dem Wörterbuch gefunden oder von der ersten Verarbeitungsvorrichtung empfangen wird;
- das Erzeugen (1060) mindestens eines Rendering-Befehls und eines Rendering-Status einer Grafik-API auf der Grundlage des Ausgabesatzes von Grafik-Rendering-Elementen;
- das Auslösen (1070) der Anzeige des Einzelbilds auf der mindestens einen Anzeige auf der Grundlage des Rendering-Status.

14. Computerprogrammprodukt, gespeichert auf einem nichtflüchtigen computerlesbaren Medium, umfassend Computercodeanweisungen zum Ausführen eines Verfahrens nach einem der Ansprüche 12 oder 13.

## Revendications

1. Premier dispositif informatique (310) comprenant :
- un point d'extrémité de communication (311) configuré pour établir une connexion avec un second dispositif informatique (320), le premier dispositif informatique étant responsable de l'exécution d'une ou de plusieurs applications qui sont contrôlées depuis le second dispositif informatique ;
- un accès à un dictionnaire (312) d'éléments de rendu graphique uniques, un élément de rendu graphique unique étant une commande de rendu graphique ou un paramètre de rendu graphique, le dictionnaire comprenant, pour chaque élément de rendu graphique unique :
- une définition de l'élément de rendu graphique unique, une définition de l'élément de rendu graphique unique comprenant un type d'élément et une valeur de paramètres associés au type d'élément ;
- un identifiant unique ;
- une indication de si la définition de l'élément de rendu graphique unique a déjà ou non été envoyée au second dispositif informatique ;
- au moins une logique de traitement (313) configurée pour :
- déterminer, pour une trame à afficher par le second dispositif informatique, un ensemble d'entrée d'éléments de rendu graphique en utilisant au moins une commande de rendu et un état de rendu d'une API graphique pour ladite trame ;
- convertir ledit ensemble d'entrée d'éléments de rendu graphique en un ensemble de transmission d'éléments de rendu graphique uniques appartenant audit dictionnaire ;
- envoyer au second dispositif informatique, pour chaque élément graphique unique de l'ensemble de transmission :
- l'identifiant unique de l'élément de rendu graphique unique ;
- si l'élément de rendu graphique unique n'a pas déjà été envoyé au second dispositif informatique, la définition de l'élément de rendu graphique unique,
les informations envoyées étant utilisées par le second dispositif informatique pour afficher la trame.

2. Premier dispositif informatique selon la revendication 1, dans lequel ladite au moins une logique de traitement est en outre configurée, pour au moins un élément de rendu graphique, pour :
- vérifier s'il a ou n'a pas d'impact sur l'affichage de la trame ;
- si et seulement s'il a un impact sur l'affichage de la trame, l'ajouter à l'ensemble d'entrée.

3. Premier dispositif informatique selon l'une quelconque des revendications 1 à 2, dans lequel ladite au moins une logique de traitement est en outre configurée, suite à la conversion d'un élément de rendu graphique de l'ensemble d'entrée en un élément de rendu graphique unique de l'ensemble de transmission, pour :
- vérifier si l'élément de rendu graphique unique est ou n'est pas déjà présent dans le dictionnaire ;
- si et seulement s'il n'est pas déjà présent dans le dictionnaire, créer une entrée dans le dictionnaire pour l'élément de rendu graphique unique, avec un nouvel identifiant unique, et une indication du fait que l'élément n'a pas déjà été envoyé au second dispositif informatique.

4. Premier dispositif informatique selon l'une quelconque des revendications précédentes, dans lequel ladite au moins une logique de traitement (313) est configurée pour exécuter un pilote graphique virtuel (216), et dans lequel l'ensemble d'entrée d'éléments de rendu graphique d'une trame à afficher par le second dispositif informatique est une mémoire tampon de trame à afficher, généré par un dispositif de composition de fenêtre(s) (215).

5. Premier dispositif informatique selon l'une quelconque des revendications précédentes, dans lequel :
- le dictionnaire comprend, pour chaque élément de rendu unique, un champ de bits ;
- le second dispositif informatique est associé à une position définie dans le champ de bits ;
- l'indication de si la définition de l'élément de rendu graphique unique a déjà été envoyée au second dispositif informatique est fournie par la valeur du bit à la position définie dans le champ de bits.

6. Premier dispositif informatique selon l'une quelconque des revendications précédentes, dans lequel l'au moins une logique de traitement est en outre configurée pour envoyer au second dispositif informatique, séparément dudit ensemble de transmission, des informations de synchronisation relatives au dictionnaire.

7. Premier dispositif informatique selon l'une quelconque des revendications précédentes, dans lequel les éléments de rendu graphique uniques sont définis hiérarchiquement, des éléments de rendu graphique uniques de niveau plus haut étant dépendants d'éléments de rendu graphique uniques de niveau plus bas.

8. Premier dispositif informatique selon l'une quelconque des revendications précédentes, dans lequel chaque élément de rendu graphique unique de l'ensemble de transmission est représenté en tant que nœud d'un arbre et, pour chaque nœud représentant un élément de rendu graphique unique défini :
- les successeurs dudit nœud sont les éléments de rendu graphique uniques qui ont un impact sur ledit élément de rendu graphique unique ;
- ledit élément de rendu graphique unique comprend, en tant que paramètres, les identifiant uniques des éléments de rendu graphique uniques des enfants dudit nœud.

9. Premier dispositif informatique selon la revendication 8, dans lequel l'au moins une logique de traitement est configurée pour inclure dans l'ensemble de transmission tous les éléments de rendu graphique uniques dans ledit arbre à l'exception de ceux qui correspondent à des successeurs de nœuds correspondant à des éléments de rendu graphique uniques qui ont déjà été envoyés au second dispositif informatique.

10. Second dispositif informatique (320) comprenant :
- un point d'extrémité de communication (321) configuré pour établir une connexion avec un premier dispositif informatique (310), le premier dispositif informatique étant responsable de l'exécution d'une ou de plusieurs applications qui sont commandées depuis le second dispositif informatique ;
- un accès à au moins un affichage (324) ;
- un accès à un dictionnaire (322) d'éléments de rendu graphique uniques, un élément de rendu graphique unique étant une commande de rendu graphique ou un paramètre de rendu graphique, le dictionnaire comprenant, pour chaque élément de rendu graphique unique :
- une définition de l'élément de rendu graphique unique, une définition de l'élément de rendu graphique unique comprenant un type d'élément et une valeur de paramètres associés au type d'élément ;
- un identifiant unique ;
- au moins une logique de traitement (313) configurée pour :
- recevoir, depuis ledit premier dispositif informatique, un ensemble de transmission d'éléments de rendu graphique uniques pour une trame à afficher par ledit second dispositif informatique, ledit ensemble de transmission comprenant, pour chaque élément de rendu graphique unique :
- un identifiant unique ;
- si l'élément de rendu graphique unique n'est pas déjà présent dans ledit dictionnaire, une définition dudit élément de rendu graphique unique ;
- convertir ledit ensemble de transmission d'éléments de rendu graphique uniques en un ensemble de sortie d'éléments de rendu graphique appartenant audit dictionnaire en utilisant, pour chaque élément de rendu graphique unique, sa définition trouvée dans le dictionnaire ou reçue depuis le premier dispositif de traitement ;
- générer au moins une commande de rendu et un état de rendu d'une API graphique sur la base dudit ensemble de sortie d'éléments de rendu graphique ;
- déclencher l'affichage, sur ledit au moins un affichage, de la trame sur la base dudit état de rendu.

11. Système informatique (300) comprenant :
- un premier dispositif informatique selon l'une des revendications 1 à 9 ;
- un second dispositif informatique selon 10.

12. Procédé mis en œuvre par ordinateur (900) comprenant, par un premier dispositif informatique (310) :
- l'établissement (910) d'une connexion avec un second dispositif informatique (320), le premier dispositif informatique étant responsable de l'exécution d'une ou de plusieurs applications qui sont commandées depuis le second dispositif informatique ;
- l'accès (920) à un dictionnaire d'éléments de rendu graphique uniques, un élément de rendu graphique unique étant une commande de rendu graphique ou un paramètre de rendu graphique, le dictionnaire comprenant, pour chaque élément de rendu graphique unique :
- une définition de l'élément de rendu graphique unique, une définition de l'élément de rendu graphique unique comprenant un type d'élément et une valeur de paramètres associés au type d'élément ;
- un identifiant unique ;
- une indication de si la définition de l'élément de rendu graphique unique a déjà ou non été envoyée au second dispositif informatique ;
- la détermination (930), pour une trame à afficher par le second dispositif informatique, d'un ensemble d'entrée d'éléments de rendu graphique en utilisant au moins une commande de rendu et un état de rendu d'une API graphique pour ladite trame ;
- la conversion (940) dudit ensemble d'entrée d'éléments de rendu graphique en un ensemble de transmission d'éléments de rendu graphique uniques appartenant audit dictionnaire ;
- l'envoi (950) au second dispositif informatique, pour chaque élément graphique unique de l'ensemble de transmission, de :
- l'identifiant unique de l'élément de rendu graphique unique ;
- si l'élément de rendu graphique unique n'a pas déjà été envoyé au second dispositif informatique, la définition de l'élément de rendu graphique unique,
les informations envoyées étant utilisées par le second dispositif informatique pour afficher la trame.

13. Procédé mis en œuvre par ordinateur (1000) comprenant, par un second dispositif informatique (320) :
- l'établissement (1010) d'une connexion avec un premier dispositif informatique (310), le premier dispositif informatique étant responsable de l'exécution d'une ou de plusieurs applications qui sont commandées depuis le second dispositif informatique ;
- l'accès (1020) à au moins un affichage ;
- l'accès (1030) à un dictionnaire d'éléments de rendu graphique uniques, un élément de rendu graphique unique étant une commande de rendu graphique ou un paramètre de rendu graphique, le dictionnaire comprenant, pour chaque élément de rendu graphique unique :
- une définition de l'élément de rendu graphique unique, une définition de l'élément de rendu graphique unique comprenant un type d'élément et une valeur de paramètres associés au type d'élément ;
- un identifiant unique ;
- la réception (1040), depuis ledit premier dispositif informatique, d'un ensemble de transmission d'éléments de rendu graphique uniques pour une trame à afficher par ledit second dispositif informatique, ledit ensemble de transmission comprenant, pour chaque élément de rendu graphique unique :
- un identifiant unique ;
- si l'élément de rendu graphique unique n'est pas déjà présent dans ledit dictionnaire, une définition dudit élément de rendu graphique unique ;
- la conversion (1050) dudit ensemble de transmission d'éléments de rendu graphique uniques en un ensemble de sortie d'éléments de rendu graphique appartenant audit dictionnaire en utilisant, pour chaque élément de rendu graphique unique, sa définition trouvée dans le dictionnaire ou reçue depuis le premier dispositif de traitement ;
- la génération (1060) d'au moins une commande de rendu et d'un état de rendu d'une API graphique sur la base dudit ensemble de sortie d'éléments de rendu graphique ;
- le déclenchement (1070) de l'affichage, sur ledit au moins un affichage, de la trame sur la base dudit état de rendu.

14. Produit programme d'ordinateur, stocké sur un support lisible par ordinateur non transitoire, comprenant des instructions de code informatique pour exécuter un procédé selon l'une des revendications 12 ou 13.
